# EUROPEAN PATENT APPLICATION

(11) **EP 1 742 177 A1**
(43) Date of publication of application: **10.01.2007**
(21) Application number: 06013628.0
(22) Date of filing: 30.06.2006
(51) Int. Cl.: G06Q 30/00

(54) **Categorization of web sites and web documents**

(30) Priority: 05.07.2005 US 696760 P; 16.03.2006 US 377095
(71) Applicant: Claria Corporation, Redwood City, CA 94063 (US)
(72) Inventor: Martin, Anthony G., Los Altos CA 94022 (US)
(74) Representative: Käck, Jürgen

(57) **Abstract**

In one embodiment, websites and web pages are categorized using search results gathered from a plurality of client computers (800). The gathered search results may be queried to find a set of search results responsive to a keyword for a category (808). Websites and web pages listed in the set of search results may be qualified for relevance (812). Qualified websites and web pages may be included in the category (814) and used to select targeted contents for end-users.

## Description

### BACKGROUND OF THE INVENTION

### 1. Field of the Invention

The present invention relates generally to computer systems, and more particularly but not exclusively to methods and apparatus for categorizing locations and documents in a computer network.

### 2. Description of the Background Art

The Internet is an example of a computer network. On the Internet, end-users (i.e. consumers) on client computers may access various types of information resident in various locations referred to as "server computers." Information on the Internet is typically available in the form of documents referred to as "web pages." A server computer that provides web pages over the Internet is also referred to as a "web server" or a "website". A website comprises a plurality of web pages. Accordingly, the term "website" is also used to refer to all web pages of that website. A website may provide information about various topics or offer goods and services. Some websites include a search engine, also referred to as "Internet search engine," that allows an end-user to search on the Internet. Examples of such websites include Yahoo, Google, and Alta Vista. A website may also include a local search engine for searching the website. For example, an on-line bookstore may include a local search engine for allowing prospective buyers to look for specific novels available from the bookstore.

Just like in other medium, such as radio and television, companies may advertise on the Internet. Advertising revenues may help pay for the development and maintenance of free software (i.e., a computer program) or a website. Advertisements may be displayed as part of a web page or in a separate window. Generally speaking, the efficacy of an advertising campaign on the Internet may be measured in terms of "click-through" rate, which takes into account the number of times an advertisement has been clicked on (e.g., using a mouse) by end-users. The higher the click-through rate, the more effective the advertising. Because effective advertising results in higher revenue not only for manufacturers of products being advertised but also for companies that display the advertisements, increasing click-through rates is generally desirable.

To increase the chance of an end-user clicking on an advertisement, advertisers have developed "targeting techniques" to match advertisements with particular end-users. For example, some websites employ cookies to keep track of end-user purchasing activity on the website. This allows a website to advertise to an end-user products that are related to those previously purchased by the end-user. A specific example of this targeting technique is to advertise a romance novel to an end-user who has previously purchased books in the same category. Some advertisers also develop end-user profiles that are based on demographic information. An advertiser may also use an end-user profile to identify advertisements that may be of interest to a particular end-user.

Targeting techniques have applications beyond conventional advertising. For example, some websites offer customized web pages for end-users. In these websites, the end-user has to manually configure his custom web page by providing demographics, preference, and other information to the website to be able to receive personalized content on the custom web page. Knowing the preference and behavior of the end-user allows the website to provide targeted content (e.g. articles, news, music, video, etc.) to the end-user.

While the aforementioned targeting techniques are generally effective, even more effective targeting techniques are required to attract end-user attention in the ever expanding Internet.

### SUMMARY

The invention is defined in claims 1 and 7, respectively. Particular embodiments of the invention are set out in the dependent claims.

In one embodiment, websites and web pages are categorized using search results gathered from a plurality of client computers. The gathered search results may be queried to find a set of search results responsive to a keyword for a category. Websites and web pages listed in the set of search results may be qualified for relevance. Qualified websites and web pages may be included in the category and used to select targeted contents for end-users.

These and other features of the present invention will be readily apparent to persons of ordinary skill in the art upon reading the entirety of this disclosure, which includes the accompanying drawings and claims.

### DESCRIPTION OF THE DRAWINGS

FIG. 1 shows a schematic diagram of an example computer that may be used in embodiments of the present invention.
FIG. 2 shows a schematic diagram of a computing environment in accordance with an embodiment of the present invention.
FIG. 3 shows an example web page from a search engine.
FIG. 4 shows an example search results displayed in an instance of web browser.
FIG. 5 pictorially illustrates a sequence of events that may occur when an end-user clicks on a link listed in a search result, in accordance with an embodiment of the present invention.
FIG. 6 schematically shows a data packet in accordance with an embodiment of the present invention.
FIG. 7 schematically shows a message unit in accordance with an embodiment of the present invention.
FIG. 8 shows a flow diagram of a method of categorizing locations and documents in a computer network in accordance with an embodiment of the present invention.
FIG. 9 shows a flow diagram of a method of displaying advertisements in a client computer in accordance with an embodiment of the present invention.

The use of the same reference label in different drawings indicates the same or like components.

### DETAILED DESCRIPTION

In the present disclosure, numerous specific details are provided, such as examples of apparatus, components, and methods, to provide a thorough understanding of embodiments of the invention. Persons of ordinary skill in the art will recognize, however, that the invention can be practiced without one or more of the specific details. In other instances, well-known details are not shown or described to avoid obscuring aspects of the invention.

Being computer-related, it can be appreciated that the components disclosed herein may be implemented in hardware, software, or a combination of hardware and software (e.g., firmware). Software components may be in the form of computer-readable program code stored in a computer-readable storage medium, such as memory, mass storage device, or removable storage device. For example, a computer-readable medium may comprise computer-readable program code for performing the function of a particular component. Likewise, computer memory may be configured to include one or more components, which may then be executed by a processor. Components may be implemented separately in multiple modules or together in a single module.

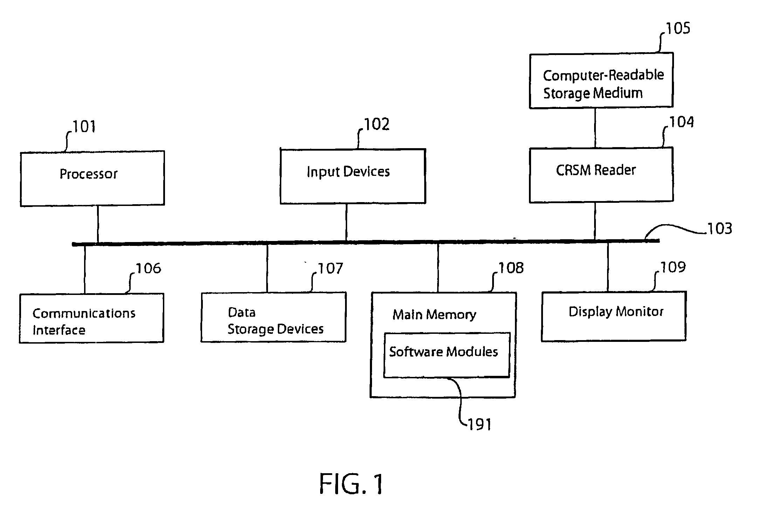

Referring now to FIG. 1, there is shown a schematic diagram of an example computer that may be used in embodiments of the present invention. Depending on its configuration, the computer shown in the example of FIG. 1 may be employed as a client computer, a server computer, or other data processing device. The computer of FIG. 1 may have less or more components to meet the needs of a particular application. As shown in FIG. 1, the computer may include a processor 101, such as those from the Intel Corporation or Advanced Micro Devices, for example. The computer may have one or more buses 103 coupling its various components. The computer may include one ore more input devices 102 (e.g., keyboard, mouse), a computer-readable storage medium (CRSM) 105 (e.g., floppy disk, CD-ROM, flash memory), a CRSM reader 104 (e.g., floppy drive, CD-ROM drive, flash memory reader), a display monitor 109 (e.g., cathode ray tube, flat panel display), a communications interface 106 (e.g., network adapter, modem) for coupling to a network, one or more data storage devices 107 (e.g., hard disk drive, optical drive, non-volatile memory), and a main memory 108 (e.g., RAM). Software embodiments may be stored in the computer-readable storage medium 105 for reading into the data storage device 107 or the main memory 108. Software embodiments in the main memory 108 may be executed by the processor 101. In the example of FIG. 1, the main memory 108 is shown as comprising software modules 191, which may comprise one or more software components of a client computer 110 or a message server computer 140 described later on below. The software modules 191 may be loaded from the computer-readable storage medium 105, the data storage device 107, or over the Internet by way of the communications interface 106, for example. The software modules 191 and other programs in the main memory 108 may be executed by the processor 101.

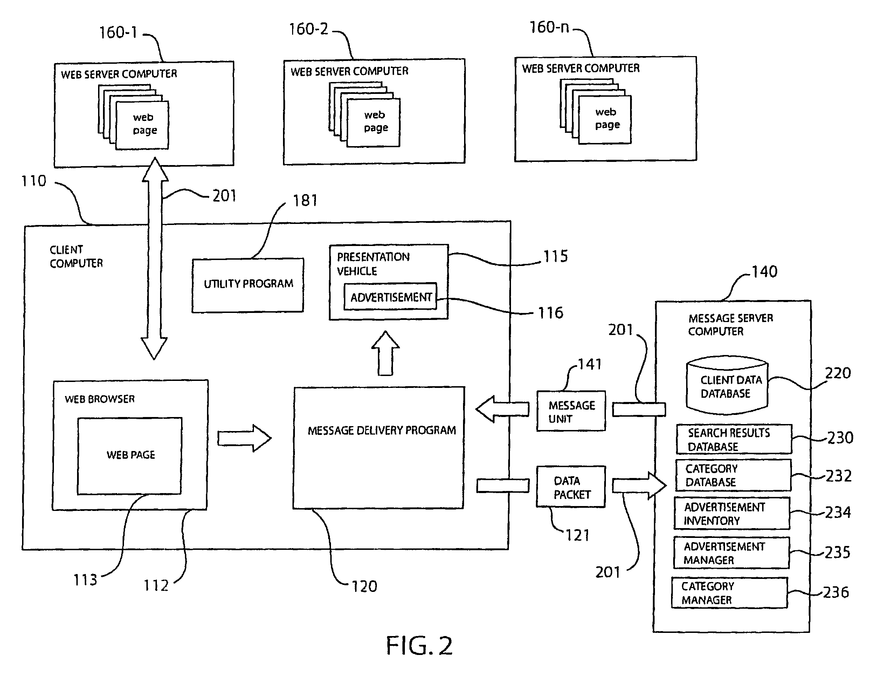

FIG. 2 shows a schematic diagram of a computing environment in accordance with an embodiment of the present invention. In the example of FIG. 2, the computing environment includes one or more web server computers 160 (i.e., 160-1, 160-2,...), one or more client computers 110, one or more message server computers 140, and other computers not specifically shown. In the example of FIG. 2, a client computer 110 communicates with server computers (e.g., a web server computer or a message server computer) over the Internet. As such, arrows 201 denote Internet connections. Intermediate nodes such as gateways, routers, bridges, Internet service provider networks, public-switched telephone networks, proxy servers, firewalls, and other network components are not shown for clarity.

A client computer 110 is typically, but not necessarily, a personal computer such as those running the Microsoft Windows™ operating system, for example. An end-user may employ a suitably equipped client computer 110 to get on the Internet and access computers coupled thereto. For example, a client computer 110 may be used to access web pages from a web server computer 160. As such, an "end-user navigating on the Internet" means that the end-user is using a client computer to browse web pages of websites.

A web server computer 160 may be a server computer hosting a website, which comprises web pages designed to attract end-users navigating on the Internet. A web server computer 160 may include advertisements, downloadable computer programs, a search engine, and products available for online purchase. As can be appreciated, a website may be on one or more web server computers.

A message server computer 140 may include the functionalities of a web server computer 160. In one embodiment, a message server computer 140 includes a client data database 220, a search results database 230, a category database 232, an advertisement inventory 234, an advertisement manager 235, and a category manager 236. As will be more apparent below, the client data database 220 may store client data received from message delivery programs 120 running in client computers 110. The client data may be transmitted from a client computer 110 to the message server computer 140 in a data packet 121. The client data may include navigation, behavioral, and search data obtained by a message delivery program 120 by monitoring an end-user's online activities. In the example of FIG. 2, the message server computer 140 is shown as communicating with one client computer 110 for clarity of illustration. In practice, the message server computer 140 receives data packets 121 containing client data from a plurality of client computers 110, each having a message delivery program 120. The message server computer 140 may also include downloadable computer programs and files for supporting, updating, and maintaining software components on client computers 110. The components of the message server computer 140 are further discussed below.

Web server computers 160 and the message server computer 140 are typically, but not necessarily, server computers, such as those available from Sun Microsystems, Hewlett-Packard, or International Business Machines. A client computer 110 may communicate with a web server computer 160 or the message server computer 140 using any suitable communication protocol.

As shown in FIG. 2, a client computer 110 may include a web browser 112 and a message delivery program 120. The web browser 112 may be a commercially available web browser or web client. In one embodiment, the web browser 112 comprises the Microsoft Internet Explorer ™ web browser. A web browser allows an end-user on a client computer to access a web page. In the example of FIG. 2, the web browser 112 is depicted as displaying a web page 113 from a web server computer 160. A web page, such as the web page 113, has a corresponding address referred to as a "URL" (Uniform Resource Locator). The web browser 112 is pointed to the URL of a web page to receive that web page in client computer 110. The web browser 112 may be pointed to a URL by entering the URL at an address window of the web browser 112, or by clicking a link pointed to that URL, for example.

In one embodiment, a message delivery program 120 is downloadable from the message server computer 140 or a web server computer 160. A message delivery program 120 may be downloaded to a client computer 110 in conjunction with the downloading of another computer program. For example, a message delivery program 120 may be, but not necessarily, downloaded to a client computer 110 along with a utility program 181 that is provided free of charge or at a reduced cost. The utility program 181 may be an e-wallet or calendar program, for example. The utility program 181 may be provided to an end-user in exchange for the right to deliver advertisements to that end-user's client computer 110 via the message delivery program 120. In essence, revenue from advertisements delivered to the end-user helps defray the cost of creating and maintaining the utility program. A message delivery program 120 may also be provided to the end-user along with free or reduced cost access to an online service, for example. A message delivery program 120 may be provided to the end-user for other reasons without detracting from the merits of the present invention.

A message delivery program 120 is a client-side program in that it is stored and run in a client computer 110. A message delivery program 120 may comprise computer-readable program code for displaying targeted content (e.g. targeted advertising) in a client computer 110 and for monitoring the online activity of an end-user on the client computer 110. It is to be noted that the mechanics of monitoring an end-user's online activity, such as determining where an end-user is navigating to, the URLs of web pages received in a client computer 110, the domain names of websites visited by the end-user, what the end-user is typing on a web page, what keyword the end-user is providing to a search engine, the search results received in the client computer, whether the end-user clicked on a link on search results or an advertisement on a web page, when the end-user activates a mouse or keyboard, and the like, is, in general, known in the art and not further described here. For example, a message delivery program 120 may learn of end-user online activities by receiving event notifications from a web browser 112.

A message delivery program 120 may record the end-user's online activity for reporting to the message server computer 140. The recorded end-user online activity is also referred to as "client data," and provided to the message server computer 140 using data packets 121. The message server computer 140 may use the client data to provide targeted content to the end-user. For example, the message server computer 140 may include in a message unit 141 targeted advertisement or data for displaying the targeted advertisement. In the example of FIG. 2, the targeted advertisement is labeled as advertisement 116 and displayed in a presentation vehicle 115. The presentation vehicle 115 may be a pop-under, pop-up, separate browser window, custom browser window, or other means for displaying information on a computer screen. Techniques for delivering advertisements to client computers using a client-side program are also disclosed in commonly-owned U.S. Application No. 10/152,204, entitled "Method and Apparatus for Displaying Messages in Computer Systems," filed on May 21, 2002 by Scott G. Eagle, David L. Goulden, Anthony G. Martin, and Eugene A. Veteska, which is incorporated herein by reference in its entirety. The recorded end-user online activity may also be used to generate other forms of targeted content other than advertisements without detracting from the merits of the present invention.

Internet search engines may include a web page having a field where a keyword may be entered to perform a search on the keyword. For example, an end-user desiring to find information on "vacations" may enter the keyword "vacations" in a field of the search engine web page to tell the search engine to search for vacations-related information on the Internet. In response, the search engine may return a web page containing links to vacations-related web pages from websites on the Internet. The contents of such a web page are also referred to as "search results." It is to be noted that a keyword may comprise a single word or a phrase.

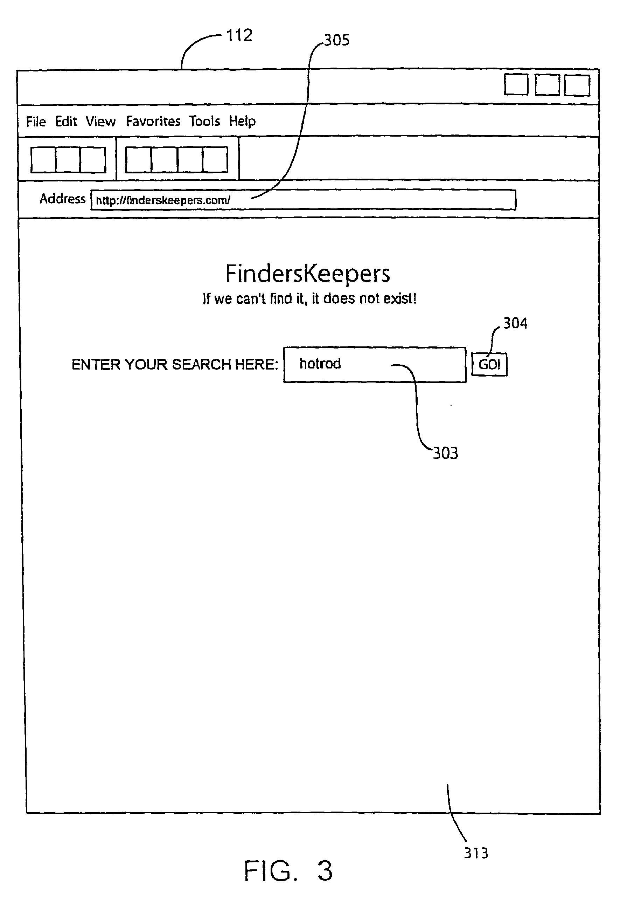

FIG. 3 shows an example web page 313 from an Internet search engine. The web page 313 may be displayed in an instance of the web browser 112. The web browser 112 may include an address field 305 indicating the location of the web page 313 on the Internet. The web page 313 may include a field 303 where an end-user may enter a keyword to be searched. In the example of FIG. 3, the end-user entered the keyword "hotrod" in the field 303. Activating (e.g., clicking using a mouse or another pointing device) the button 304 tells the search engine to search for web pages relating to "hotrod" on the Internet. In one embodiment, the message delivery program 120 records the address (e.g., the URL indicated on address field 305) of web page 313 to keep track of the search engine employed by the end-user, the keyword entered in the field 303, and responsive search results from the search engine. The message delivery program 120 includes the keyword, the address of the search engine, and the search results as search data in a data packet 121 provided to the message server computer 140.

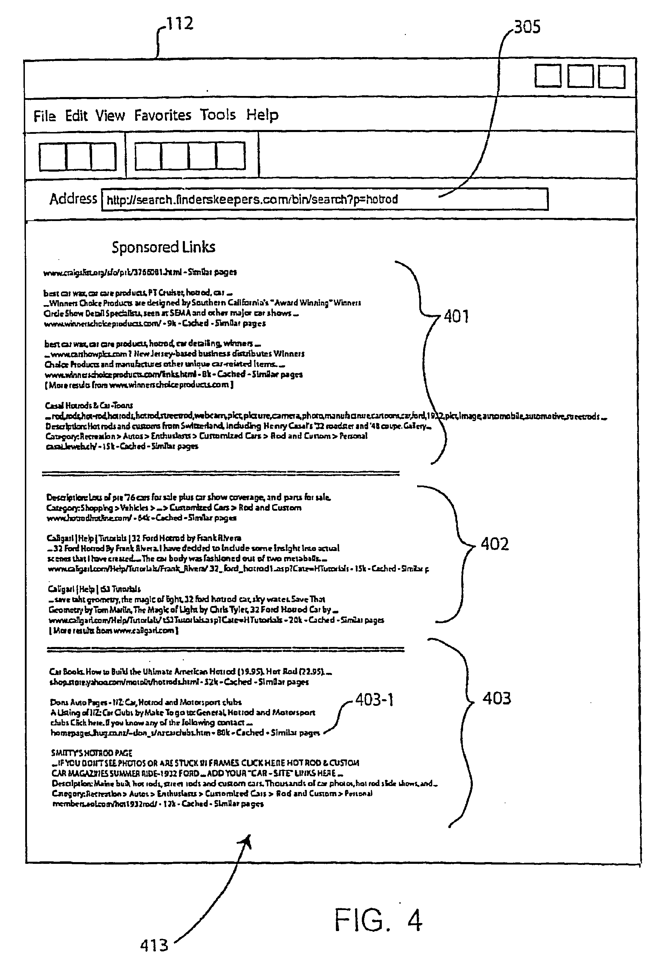

FIG. 4 shows an example search results 413 displayed in an instance of the web browser 112. The search results 413 may be in the form of a web page comprising links to web pages related to the keyword entered by the end-user in the field 303. Generally speaking, a link points to a document on the Internet; the link may be activated (e.g. clicked) to receive the document in the client computer. When a link on search results points to a home (i.e. top level) page of a website, the website (i.e. all web pages of the website) may be thought of as relevant to the keyword. When a link on search results points to a lower-level (i.e. below the home) page of a website, only that particular web page may be thought of as relevant to the keyword. This is because some websites provide information on a variety of topics, and only particular web pages of those websites may be relevant to the keyword.

Search results may include different types of links. Each type of link may be separated in the search results to provide notice to the end-user. In one embodiment, the message delivery program 120 records the addresses of the links (e.g., the URLs) and the types of the links in search results responsive to the keyword. The keyword, the links responsive to the keyword, and the types of the links may be included as search data in a data packet 121 provided to the message server computer 140. A keyword and a link responsive to the keyword are also referred to as a keyword-link combination.

In the example of FIG. 4, search results 413 include three types of links:
sponsored links 401, paid inclusion links 402, and algorithmic links 403. The number and type of links included in search results depend on the particular search engine. A sponsored link 401 may comprise a link to a web page of a website that pays a fee to be listed in the search result regardless of the keyword entered by the end-user. That is, a sponsored link 401 may or may not be relevant to the keyword. Paid inclusion links 402 may comprise a link to a web page of a website that pays a fee to be ranked higher than non-paying or lower paying websites in a search using a particular keyword. For example, a website may pay a fee to be included in searches using the keyword "apple." When an end-user searches using that keyword, a link to a web page of that website will be placed higher than those of non-paying websites or those that paid less for that keyword. Paid inclusion links are also known as pay for performance links. An algorithmic link 403 may comprise a link to a web page determined to be relevant using the search engine's search algorithm. Because they are selected based on content rather than fees paid, algorithmic links 403 are typically more relevant to the keyword compared to sponsored or paid inclusion links. The type of link may thus be taken into account when qualifying candidate websites and web pages for inclusion in a category.

Techniques for providing search results are also disclosed in commonly-assigned U.S. Application No. 10/289,123, entitled "Responding to End-user Request for Information in a Computer Network," filed by Eugene A. Veteska, David L. Goulden, and Anthony G. Martin on November 5, 2002, which is incorporated herein by reference in its entirety.

The end-user may activate a link on the search results to receive the web page pointed to by the link. When the web page pointed to by the link is the home page of a website, that link is also considered as being pointed to the website. For example, the end-user may click on the link 403-1 of the search results 413 to receive the web page pointed to by the link 403-1. In one embodiment, the message delivery program 120 records the end-user activated links as behavioral data in a data packet 121 provided to the message server computer 140. The activated links are indicative of the relevance of the web page pointed to by the link to the keyword entered by the end-user. The message server computer 140 may thus use the contents of data packets 121 to determine the most relevant websites and web pages for particular keywords. As will be more apparent below, this allows the category manager 236 to qualify candidate websites and web pages for inclusion in a category.

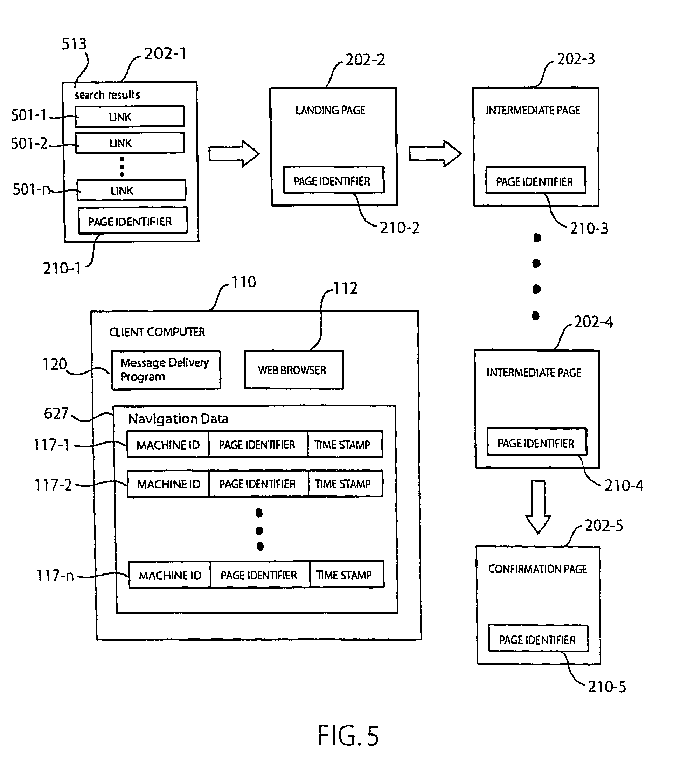

FIG. 5 pictorially illustrates a sequence of events that may occur when the end-user clicks on a link 501 (i.e., 501, 502,...) listed in search results 513, in accordance with an embodiment of the present invention. In the example of FIG. 5, web pages 202 (i.e., 202-1, 202-2,...) may be sequentially displayed in the same or separate windows of the web browser 112. Each web page 202 includes a page identifier 210 (i.e., 210-1, 210-2,...), which may be a URL. The message delivery program 120 records the URLs of web pages 202 viewed by the end-user as well the amount of time the end-user spent with each web page as navigation data. As will be more apparent below, the amount of time end-users spent on a website or a web page after clicking on it from search results may be used to qualify candidate websites and web pages for inclusion in a category. In the example of FIG. 5, the navigation data 627 comprises log entries 117 (i.e., 117-1, 117-2,...). Each log entry 117 includes a machine ID anonymously identifying the client computer 110 (or the end-user), a page identifier, and a time stamp indicating when the log entry 117 was made. The time stamps between log entries 117 provide an estimate of the amount of time the end-user spent viewing the indicated web page. An estimate of the amount of time the end-user spent viewing the indicated web page may also be separately generated by the message delivery program 120 for transmission to the message server computer 140 in a data packet 121. A log entry 117 may be created for each web page 202 viewed by the end-user. For example, a log entry 117-1 may be created when the end-user clicks on a link 501 to receive the web page 202-2 in the client computer 110, a log entry 117-2 may be created when the end-user receives the web page 202-3 in the client computer 110, and so on.

In the example of FIG. 5, the web page 202-2 is also referred to as a "landing page" because it is the web page directly pointed to by the corresponding link. A website that sells products online may also have a "confirmation page" 202-5. A confirmation page is a web page provided to the end-user to confirm a just completed online purchase. A website may have "intermediate pages" 202-3, 202-4, and so on between a landing page 202-2 and a confirmation page 202-5. An intermediate page may be an online product catalog, shopping cart, and other types of web pages. The page identifiers of landing and confirmation pages of popular or partner websites may be stored in a database (not shown) in the message server computer 140 and compared to those in the navigation data 627 of a particular client computer 110 (identified by machine ID) to determine if the end-user operating the client computer 110 converted the activation of a search results link into a purchase. Techniques for monitoring end-user purchase behavior are also disclosed in U. S. Application No. 10/464,419, entitled "Generation of Statistical Information In a Computer Network," filed by David L. Goulden and Dominic Bennett on June 17, 2003, which is incorporated herein by reference in its entirety.

It is to be noted that a link 501 listed in the search results 513 may also point to web pages of non-commercial websites, as is most often the case in embodiments where a link 501 comprises an algorithmic link. That is, a link 501 may point to enthusiasts websites, forums, news websites, and so on.

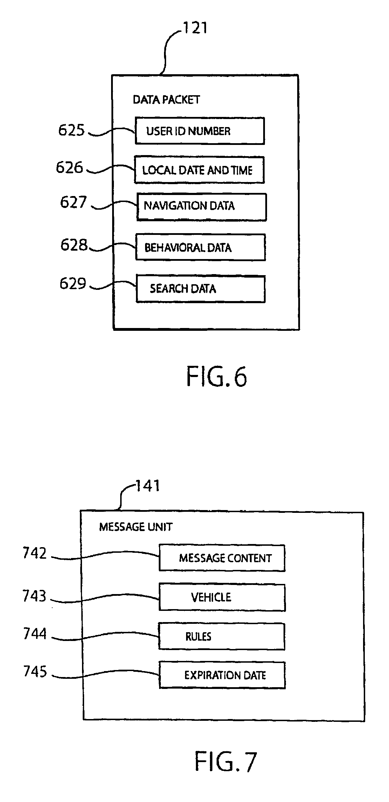

FIG. 6 schematically shows a data packet 121 in accordance with an embodiment of the present invention. A data packet 121 may include a user ID number 625 anonymously identifying the end-user or his client computer, a local date and time 626 indicating when the data packet 121 was sent from the client computer 110 to the message server computer 140, navigation data 627, behavioral data 628, and search data 629. Navigation data 627 include navigation related information, such as the websites visited by the end-user, web pages viewed, and so on. An example navigation data 627 has been discussed in connection with FIG. 5. Behavioral data 628 may contain information indicative of end-user online behavior, such as purchasing behavior, advertisements the end-user clicked on, and the like. Search data 629 include search related data, such as the search engines used (e.g., as identified by URL), keywords employed to perform a search, search results, the links and types of links on the search results, the links clicked by the end-user on search results, and the like.

Referring to FIG. 7, there is schematically shown a message unit 141 in accordance with an embodiment of the present invention. A message unit 141 may include a message content 742, a vehicle 743, rules 744, and an expiration date 745. A message content 742 may include computer-readable program code, text, images, audio, video, hyperlink, and other information. A message content 742 may be a targeted content (e.g. an advertisement) or computer-readable program code for receiving the targeted content from a server, for example.

The vehicle 743 indicates the presentation vehicle to be used in presenting the message content indicated by the message content 742. For example, the vehicle 743 may call for the use of a pop-up, banner, message box, text box, slider, separate window, window embedded in a web page, or other presentation vehicle to display a message content. In the example of FIG. 2, the advertisement 116 and the presentation vehicle 115 may be specified in a message content 742 and a vehicle 743, respectively, of a message unit 141.

The rules 744 may indicate one or more triggering conditions for processing a message unit 141. The rules 744 may specify to display a message content 742 when an end-user navigates to a specific web page or as soon as the message unit 141 is received in a client computer 110. The rules 744 may include: (a) a list of domain names (e.g. URLs of websites belonging to a specific category) at which the content of a message unit 141 is to be displayed, (b) URL sub-strings that will trigger displaying of the content of the message unit 141, and (c) time and date information.

As shown in FIG. 7, a message unit 141 may also include an expiration date 745. The expiration date 745 indicates the latest date and time the message unit 141 can still be processed. In one embodiment, expired message units 141 are not processed even if their rules 744 have been satisfied. Expired message units 141 may be removed from client computer 110.

Referring to the message server computer 140 shown in FIG. 2, the client database 220, the search results database 230, and the category database 232 may comprise a commercially available database program, such as those from the Oracle Corporation of Redwood Shores, California. The databases 220, 230, and 232 may comprise a single or multiple databases. Client data received from client computers 110 are stored in the client data database 220. A subset of the client data pertaining to search results is stored in the search results database 230. In one embodiment, the search results database 230 contains the keywords and corresponding search results from searches performed by end-users on client computers 110. As can be appreciated, millions of search results may be gathered in the message server computer 140.

In one embodiment, websites and web pages are grouped according to categories. Each category may include a listing of websites and/or web pages (e.g. by URL) relevant to that category. For example, websites and web pages relating to vacations, such as those from tourism bureaus, hotel chains, rental cars, and other vacation-related websites, may be included in the "vacations" category, websites and web pages relating to cars may be included in the "cars" category, and so on. As another example, a basketball-related web page of a multi-topic website (e.g. a portal) may be categorized under the "sports" category. A website or web page may belong to more than one category. For example, a web page pertaining to wood working may belong to both the "power tool" category and the "hobby category." In one embodiment, categories and URLs of websites and web pages belonging to each category are stored in the category database 232.

The advertisement inventory 234 may comprise a storage and retrieval mechanism for advertisements that may be delivered to client computers 110. The advertisement inventory 234 may include advertisements from various advertisers including vacation-oriented advertisers (hotel chains, car rental companies, travel agents, etc.), car-oriented advertisers (car manufacturers, car dealers, car stereo advertisers, etc.), and so on. In one embodiment, each advertisement in the advertisement inventory 234 has a ranking and one or more categories. An advertisement's category indicates the category or categories of websites and web pages for which the advertisement is relevant. An advertisement's ranking indicates its priority in the event there is more than one relevant advertisement that may be delivered (e.g. multiple advertisements with the same category). Higher ranked advertisement may be delivered to client computers 110 before lower ranked advertisements. Advertisement ranking may be based on relevance to the category, payment by advertisers, and other ranking means.

The advertisement manager 235 may comprise computer-readable program code for selecting relevant advertisements and sending them to client computers 110. In one embodiment, the advertisement manager 235 inspects a data packet 121 to determine a website or web page viewed by an end-user on a client computer 110. The advertisement manager 235 queries the category database 232 to determine the category to which the website or web page belongs. The advertisement manager 235 then checks the advertisement inventory 234 for advertisements with the same category, and delivers at least one of those advertisements to the client computer 110 by way of a message unit 141.

Categorization of websites and web pages is advantageous in that it allows for generation of targeted content. For example, an end-user navigating to the official Hawaii Tourism website is better served with advertisements relating to vacations rather than job search. That is, an end-user browsing the official Hawaii Tourism website is more likely to respond to advertisements from car rental companies and hotel chains rather than to a job placement advertisement. By including the Hawaii Tourism website in the category database 232 under the vacation category, advertisements relating to vacations may be delivered to a client computer 110 when its end-user browses the Hawaii Tourism website. As an example operation, a message delivery program 120 in a client computer 110 may detect navigation of the end-user to the Hawaii Tourism website. The message delivery program 120 may so inform the message server computer 140. There, the advertisement manager 235 may query the category database 232 to find that the Hawaii Tourism website belongs to the vacation category. The advertisement manager 235 then checks the advertisement inventory 234 for advertisements having the same category as the Hawaii Tourism website and delivers at least one of those advertisements to the client computer 110 by way of a message unit 141. At the client computer 110, the advertisement may be displayed by the message delivery program 120 in a presentation vehicle 115.

Although the benefits and implementation of categorization are explained herein in the context of advertising, categorization in general advantageously allows for generation of targeted, personalized content. By determining the categories of websites visited or web pages viewed by an end-user, the end-user's demographics and on-line behavior may be properly understood and analyzed. For example, an end-user who spends time viewing web pages in the "dating", "motorcycles", and "graduate schools" categories is likely to be a relatively young and single person. Categorization allows for easier management of targeted content as compared to separately dealing with hundreds of thousands (even millions) of individual web pages. Once the categories of interest for a particular end-user have been determined, targeted content (e.g. articles, blogs, music, video, etc.) pertaining to those categories may be provided to the end-user. For example, an end-user interested in the "travel" and "sports" categories may be provided news and links related to travel and sports in the end-user's personal web page.

Another advantage of categorization and the system of FIG. 2 is that targeted content may be provided to the end-user across different websites. For example, the message delivery program 120 in conjunction with the message server computer 140 may deliver targeted advertisements to a client computer 110 regardless of the website visited by the end-user. In contrast, conventional server-side advertisements are displayed only when end-users visit a particular website.

One way of performing categorization is to have a team of human researchers manually assign websites and web pages to various categories. That is, human researchers may manually navigate to websites, read the web pages of the websites, and manually assign each of these websites and web pages to a category. Although feasible, this approach has a couple of issues. Firstly, a significant number of human researchers may be required to build a substantial category database. Therefore, the size of the category database will depend on the number of human researchers employed and the amount of time given to them. The time constraint is especially problematic in that an advertiser may demand to advertise to end-users viewing web pages of websites that belong to an entirely new category. If it takes a while to assign websites and web pages to a new category and time is of the essence, the advertiser may be reluctant to advertise. Secondly, a website or web page may or may not be relevant to its assigned category depending on the skill of the human researcher performing the categorization. The ranking of websites and web pages in each category will only be as good as the judgment of or data available to the human researcher that assigned the ranking. The just mentioned categorization problems may be overcome by using the categorization techniques disclosed herein.

Still referring to FIG. 2, the category manager 236 may comprise computer-readable program code for assigning websites and web pages to one or more categories. For a particular category, the category manager 236 may query the search results database 230 for search results responsive to end-user searches using the particular category (or other terms synonymous with or relating to the category) as the keyword. For example, if the category is "vacation," the category manager 236 may query the search results database 230 for search results responsive to the keyword "vacation" or related keywords, such as "holiday" or "summer trip." The category manager 236 may parse the search results to get the web pages (e.g., URLs of web pages) and websites (e.g., URLs of home pages of websites) listed in the search results and assign one or more of those websites and web pages to the particular category by so updating the category database 232.

The category manager 236 may qualify each website and web page listed in the responsive search results before the website or web page is added to the particular category. For example, the category manager 236 may query the client data database 220 to determine the number of end-users who clicked on the web pages listed in search results and the amount of time end-users spent viewing the web pages. The category manager 236 may be configured such that it only selects for inclusion in the particular category only those web pages clicked by end-users from search results and viewed by the end-users for a predetermined threshold amount of time (e.g. spent at least 10 minutes viewing the web page). As a particular example, after obtaining candidate web pages from search results responsive to the keyword "vacation," the category manager 236 may query the client data database 220 to determine how many end-users clicked on each candidate web page from their corresponding search results and the amount of time end-users spent viewing the candidate web page after the clicking. The category manager 236 may be configured to include only those web pages having links clicked by end-users and viewed by end-users for a predetermined amount of time. As can be appreciated, this advantageously allows filtering of web pages from search results, thereby providing more relevant web pages in each category. Because the qualification is based on actual user behavioral information, the relevance of web pages in each category is dramatically improved.

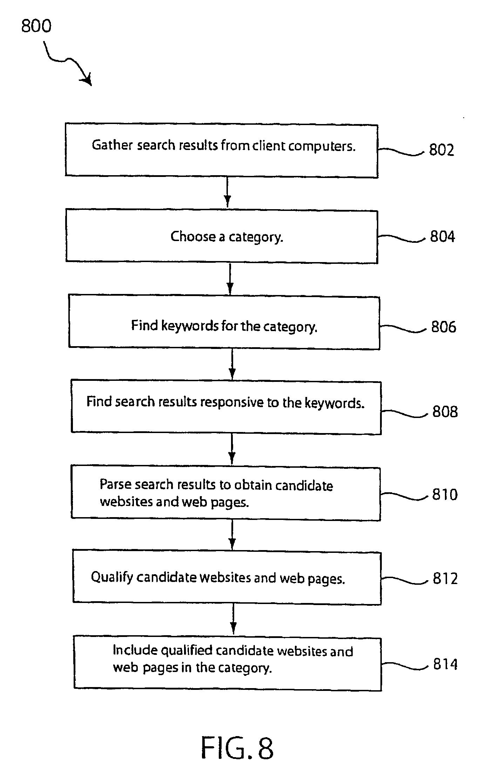

Referring now to FIG. 8, there is shown a flow diagram of a method 800 of categorizing locations and documents in a computer network in accordance with an embodiment of the present invention. In the example of FIG. 8, the method 800 is employed to categorize websites and web pages on the Internet. Method 800 may be implemented using the components shown in FIG. 2. Other components may also be used without detracting from the merits of the present invention.

In step 802, search results from searches performed by end-users on client computers are gathered in a message server computer. The search results may be responsive to keyword searches performed by end-users using an Internet search engine. The keyword for the search and the responsive search results may be provided to the message server computer for storage in a search results database, for example. Other end-user online activity information, such as the links of web pages clicked by the end-users on the search results and the amount of time the end-users spent on the clicked web pages may also be provided to the message server computer. The gathering of search results may be performed by message delivery programs running in client computers. Each message delivery program may monitor end-user online activities, such as the websites the end-user navigates to, web pages viewed by the end-user, searches performed by the end-user, links on search results clicked by the end-user, the amount of time the end-user spent viewing a web page after clicking on it in search results, and so on. The message delivery program may forward the aforementioned end-user online activity information to the message server computer as client data. As can be appreciated, millions of search results may be gathered in the message server computer using a multitude of client-side message delivery programs.

In step 804, a category, referred to as "desired category," is chosen. The desired category may be specified by an advertiser wanting to display advertisements to end-users who navigate to websites having content that is relevant to the desired category. For example, a dog food manufacturer may want to display its advertisements to end-users navigating to websites relating to dogs. In that case, "dogs" is the desired category. The desired category may also be something that typical end-users may be interested in. As another example, the desired category may be "basketball" as that is a category likely to be of interest to an end-user building a personal web page provided by a sports-related website.

In step 806, one or more keywords, referred to as "selected keywords," are found for the desired category. The desired category itself may be the selected keyword. In the dog example, "dog" may be the selected keyword. Other selected keywords for the desired category may include terms synonymous or has something to do with the desired category. In the dog example, other selected keywords may include "hounds," "retrievers," "boxers," "terriers," "pets," "veterinary," and so on.

In step 808, the search results database containing the gathered search results is queried to find search results responsive to the selected keywords. That is, search results of searches using the selected keywords are identified among the gathered search results.

In step 810, search results found to be responsive to the selected keywords are parsed to obtain the links of websites and web pages, referred to as "candidate websites and web pages," included in the search results. As is conventional, a website may include a plurality of web pages accessible from the website's home page or directly by knowing a web page's URL. When a link in the search results points to a home page of a website, all web pages of that website may be considered as a candidate for inclusion in the desired category. When a link in the search results points to a lower-level web page of a web site, only that particular web page may be considered as a being a candidate for inclusion in the desired category.

In step 812, the candidate websites and web pages are qualified. In one embodiment, only those candidate websites and web pages clicked on by end-users from their respective search results and where end-users spent a predetermined amount of time after clicking their respective search results are qualified. Candidate websites and web pages that don't meet the qualification requirements are not included in the desired category. Other qualification requirements may also be used without detracting from the merits of the present invention. The qualification of the candidate websites and web pages may also be used for ranking purposes. For example, qualified, candidate websites and web pages may be ranked according to click-through rate or average end-user viewing time.

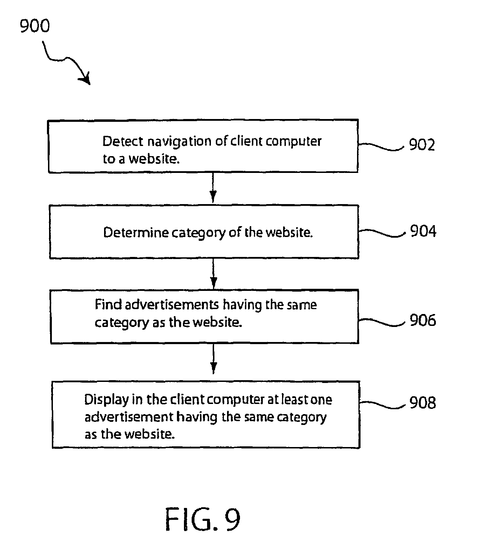

In step 814, candidate websites and web pages that have been qualified are included in the desired category. In one embodiment, the desired category and its corresponding websites and web pages are stored in a category database for use in advertisement delivery as in a method 900 of FIG. 9. The desired category and its member websites and web pages may also be generally employed to provide targeted content to end-users.

FIG. 9 shows a flow diagram of the method 900 of displaying advertisements in a client computer in accordance with an embodiment of the present invention. The method 900 may be implemented using the components shown in FIG. 2. Other components may also be used without detracting from the merits of the present invention.

In step 902, the navigation of a client computer to a website, referred to as "visited website," is detected by a client-side program. In one embodiment, the client-side program is a message delivery program (e.g. message delivery program 120). Continuing the dog example, the visited website may be pertaining to a terrier-oriented website.

In step 904, the category of the visited website is determined. Step 904 may be performed by querying a category database (e.g. category database 232) for a category including the visited website. In the dog example, the category database may list the terrier-oriented website under the dog category using the method 800. The terrier-oriented website may be listed by domain name in the category database.

In step 906, advertisements having the same category as the visited website are found. These advertisements, referred to as "found advertisements," may be found in an advertisement inventory (e.g. advertisement inventory 234) containing advertisements, and a category and a ranking for each advertisement. In the dog example, the advertisement inventory may include a dog food advertisement of the dog food manufacturer. The dog food advertisement may have the category "dog" and a relatively high ranking. Since the dog food advertisement has the same category as the visited website and has a relatively high ranking (e.g. higher ranked than other advertisements in the dog category), the dog food advertisement is deemed a "found advertisement."

In step 908, at least one of the found advertisements is displayed in the client computer. For example, the highest ranked found advertisement may be delivered from the message server computer to the client computer for display therein. In the dog example, the dog food advertisement is delivered to the client computer for display to the end-user. Because the visited website pertains to dogs, the chances of the end-user responding to the dog food advertisement are advantageously improved.

Methods and apparatus for categorizing locations in a computer network have been disclosed. While specific embodiments of the present invention have been provided, it is to be understood that these embodiments are for illustration purposes and not limiting. Many additional embodiments will be apparent to persons of ordinary skill in the art reading this disclosure.

## Claims

1. A method to be performed by a computer, the method comprising:
receiving a plurality of search results from a plurality of client computers, the search results being from Internet searches performed by end-users;
finding a keyword for a category;
finding a set of search results among the plurality of search results, the set of search results being responsive to the keyword;
obtaining candidate web pages from the set of search results;
qualifying the candidate web pages to find qualified web pages; and
including the qualified web pages in the category.

2. The method of claim 1 wherein the plurality of search results is obtained by monitoring searches performed by end-users and providing the search results to a server computer.

3. The method of claim 1 wherein qualifying the candidate web pages comprises:
determining which of the candidate web pages were clicked by end-users from search results.

4. The method of claim 1 wherein qualifying the candidate web pages comprises:
determining an amount of time end-users spent viewing the candidate web pages clicked by end-users from search results.

5. The method of claim 1 wherein the keyword is a synonym of the category.

6. The method of claim 1 further comprising:
detecting navigation of a client computer to a website;
determining a category of the website;
finding an advertisement configured for delivery to client computers navigating to websites belonging to the same category as the website; and
displaying the advertisement in the client computer.

7. A system for delivering advertisements to client computers, the system comprising:
a message server computer configured to receive from a plurality of client computers a plurality of search results, the plurality of search results being from Internet searches performed by end-users;
a search results database in the message server computer, the search results database containing the plurality of search results;
a category manager in the message server computer, the category manager being configured to find a set of search results from the plurality of search results, the set of search results containing search results that are responsive to a keyword for a category, the category manager being configured to parse the set of search results to obtain websites listed in the set of set results and include the websites in the category; and
a message delivery program in each of the plurality of client computers, the message delivery program being configured to provide search results to the server computer and to receive from the server computer an advertisement in the same category as a website visited by an end-user using a client computer in the plurality of client computers.

8. The system of claim 7 wherein the message server computer and the plurality of client computers communicate over the Internet.

9. The system of claim 7 wherein the message delivery program in each of the plurality of client computers is provided in a client computer along with a utility program that is provided at no cost.

10. The system of claim 7 further comprising a category database containing information about categories of websites and websites belonging to each of the categories.
